(19) Europäisches Patentamt
European Patent Office
Office européen des brevets

(11) **EP 3 527 334 A1**

(12) **EUROPEAN PATENT APPLICATION**

(43) Date of publication:
**21.08.2019 Bulletin 2019/34**

(51) Int Cl.:
***B25J 9/16*** *(2006.01)*

(21) Application number: **18190432.7**

(22) Date of filing: **23.08.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.02.2018 JP 2018026700**

(71) Applicant: **OMRON CORPORATION**
**Kyoto-shi, Kyoto 600-8530 (JP)**

(72) Inventors:
• **SHIRAHORI, Shinichiro**
 **Kyoto-shi, Kyoto 600-8530 (JP)**
• **KARAKO, Yukihisa**
 **Kyoto-shi, Kyoto 600-8530 (JP)**

(74) Representative: **Horn Kleimann Waitzhofer**
**Patentanwälte PartG mbB**
**Ganghoferstrasse 29a**
**80339 München (DE)**

(54) **SIMULATION APPARATUS, SIMULATION METHOD, AND SIMULATION PROGRAM**

(57) Provided is a simulation apparatus that can execute a simulation while giving consideration to dropping a workpiece. The simulation apparatus includes a load deriving unit that derives a load moment that is generated in an elastic suction pad that holds a workpiece due to the difference between the acceleration rate of a robot arm to which the suction pad is attached and the acceleration rate of the workpiece when executing a simulation in which a simulation model including the workpiece, the suction pad, and the robot arm is moved at an accelerated rate based on an operation instruction, and an execution condition change unit that performs processing for changing, if the load moment derived by the load deriving unit is larger than a threshold value, an execution condition of the simulation such that the load moment derived by the load deriving unit does not exceed the threshold value. The load moment is derived by subtracting a moment that is generated due to inertial force from a moment that is generated in the workpiece.

## FIG. 2

EP 3 527 334 A1

**Description**

CROSS-REFERENCES TO RELATED APPLICATIONS

This application claims priority to Japanese Patent Application No. 2018-026700 filed February 19, 2018, the entire contents of which are incorporated herein by reference.

FIELD

The present invention relates to a simulation apparatus, a simulation method, and a simulation program.

BACKGROUND

In manufacturing lines of factories and the like, there are pick-and-place apparatuses that convey workpieces such as components and products. For example, the pick-and-place apparatus has a holder that holds a workpiece by suctioning the workpiece using a suction pad or the like, suctions and holds a workpiece at a predetermined location, conveys the workpiece in a holding state, and releases the suctioning at its destination and places the workpiece.
A simulation apparatus that uses a workpiece model and a model of a handling robot in order to determine an optimum execution condition of a pick-and-place apparatus has been suggested (for example, see JP H7-256578A).
According to the technique described in JP H7-256578A, a vibrational acceleration rate that is applied to a workpiece model is calculated from the operation speed of a handling robot and the mass of the workpiece model, and, as a result, an operation condition of the apparatus can be determined based on the vibrational acceleration rate.
JP H7-256578A is an example of background art.
However, in the technique described in JP H7-256578A, although it is possible to check vibration that is applied to the workpiece model through simulation, it is not possible to check what degree of vibration causes the handling robot to fail to hold a workpiece and let the workpiece drop.

SUMMARY

The present invention has been made in light of the above-described issue, and aims to provide a simulation apparatus, a simulation method, and a simulation program that can execute a simulation that give consideration to dropping a workpiece.
A simulation apparatus according to the present invention includes a deriving unit that derives a load moment that is generated in an elastic holder that holds a workpiece due to a difference between an acceleration rate of a robot arm to which the holder is attached and an acceleration rate of the workpiece, when executing a simulation in which a simulation model including models of the workpiece, the holder, and the robot arm is accelerated based on an operation instruction, and an execution condition change unit that performs processing for changing, if the load moment derived by the deriving unit is larger than a threshold value, an execution condition of the simulation such that the load moment derived by the deriving unit does not exceed the threshold value.
The load moment is derived by subtracting a moment that is generated due to inertial force from a moment that is generated in the workpiece.
In a case where the accelerated movement is horizontal movement, the moment that is generated due to the inertial force can be a moment that is generated due to horizontal inertial force acting in a horizontal direction, and in a case where the accelerated movement is movement in a direction inclined in the horizontal direction, can be a sum of a moment that is generated due to horizontal inertial force acting in the horizontal direction and a moment that is generated due to vertical inertial force acting in a vertical direction.
In a case where the execution condition is a maximum acceleration rate, if the load moment derived by the deriving unit is larger than the threshold value, the execution condition change unit can perform processing for decreasing the maximum acceleration rate.
In a case where the execution condition is a maximum acceleration rate, if the load moment derived by the deriving unit does not exceed a threshold value, the execution condition change unit can perform processing for increasing the maximum acceleration rate.
In a case where processing for changing the execution conditions is repeated, the execution condition change unit can present, as a final execution condition, an execution condition under which the load moment derived by the deriving unit does not exceed the threshold value and is closest to the threshold value.
A determination unit that determines that holding of the workpiece by the holder is released, in other words, the workpiece drops off the holder if the load moment derived by the deriving unit is larger than the threshold value can be further included.

The execution condition change unit can change the execution condition for simulation or perform a presentation required for changing the execution condition, with respect to a section including a timing at which it is determined by the determination unit that the workpiece drops, from a plurality of sections that are separated based on operation instructions regarding the robot arm in a conveyance route of the robot arm.

The threshold value can be set as a maximum value of a load moment that is generated under an execution condition under which holding of the workpiece by the holder is not released when the execution condition is changed, and an actual machine provided with a robot arm equivalent to the simulation model is repeatedly operated.

In the above-described simulation apparatus, a display unit that displays a simulation result that satisfies the execution condition is further included.

A simulation method according to the present invention includes a step of deriving a load moment that is generated in an elastic holder that holds a workpiece due to a difference between an acceleration rate of a robot arm to which the holder is attached and an acceleration rate of the workpiece when executing a simulation in which a simulation model including models of the workpiece, the holder, and a step of performing processing for changing, if the load moment derived by the deriving unit is larger than a threshold value, an execution condition of the simulation such that the load moment derived by the deriving unit does not exceed the threshold value.

According to a simulation program according to the present invention, a computer is caused to perform a step of deriving a load moment that is generated in an elastic holder that holds a workpiece due to a difference between an acceleration rate of a robot arm to which the holder is attached and an acceleration rate of the workpiece when executing a simulation in which a simulation model including models of the workpiece, the holder, and a step of performing processing for changing, if the load moment derived by the deriving unit is larger than a threshold value, an execution condition of the simulation such that the load moment derived by the deriving unit does not exceed the threshold value.

According to the present invention, if a load moment is larger than a threshold value, processing for changing an execution condition of simulation and decreases the load moment to the threshold value or smaller is performed. When the load moment decreases to the threshold value or smaller, it is possible to prevent the workpiece from dropping, and thus it is possible to provide simulation in which dropping the workpiece is taken into consideration.

BRIEF DESCRIPTION OF THE DRAWINGS

Fig. 1 is a block diagram showing the hardware configuration of a simulation apparatus according to a first embodiment.

Fig. 2 is a block diagram showing an example of the functional configuration of a simulation apparatus.

Fig. 3 is a diagram showing an example of coordinate positions at which a robot operates.

Fig. 4 is a diagram showing an example of a motion program.

Fig. 5 is a diagram showing an example of a motion parameter.

Fig. 6 is a diagram showing a state where a workpiece has been suctioned successfully and a state where a workpiece has not been suctioned successfully.

Fig. 7 is a diagram showing downward force that is applied to a workpiece.

Fig. 8 is a diagram showing the difference in acceleration rate between a robot arm and a workpiece.

Fig. 9 is a diagram showing rotary movement of a workpiece.

Fig. 10 is a diagram showing an example of a physical model including a robot arm, a holder, and a workpiece.

Fig. 11 is a flowchart showing a flow of an operation that is executed by a CPU of a simulation apparatus.

Fig. 12 is a flowchart showing a flow of processing for changing the maximum acceleration rate (an execution condition) during vertical movement.

Fig. 13 is a flowchart showing a flow of processing for changing the maximum acceleration rate (an execution condition) during horizontal movement.

Fig. 14 is a diagram showing a change in speed and a change in acceleration rate in the case where an accelerating time is changed.

Fig. 15 is a flowchart showing a flow of an operation that is executed by a CPU of a simulation apparatus according to a second embodiment.

Fig. 16 is a diagram showing force that is applied to a workpiece.

DETAILED DESCRIPTION

Examples of embodiments of the present invention will be described below with reference to the drawings. Note that, in the drawings, the same reference numerals are given to the same or equivalent constituent elements and portions. In addition, the dimensional ratio in the drawings is exaggerated for convenience of explanation, and may be different from the actual rate.

First Embodiment

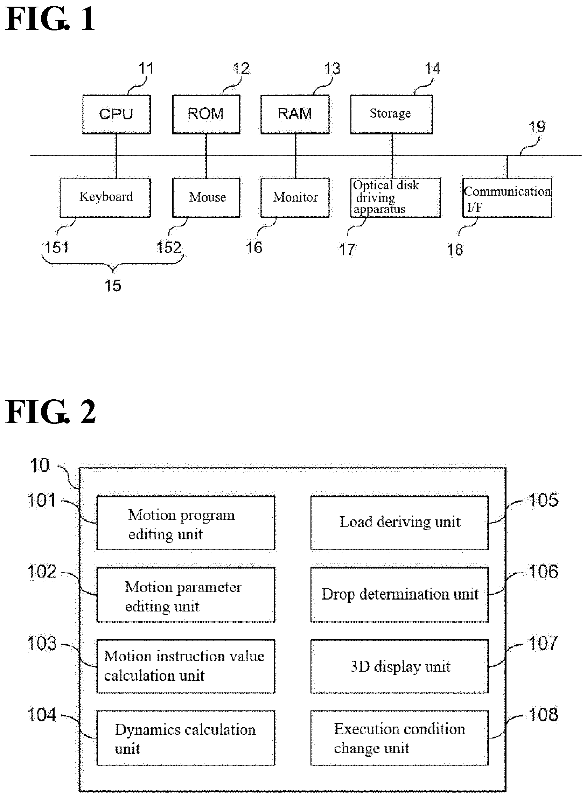

Fig. 1 is a block diagram showing the hardware configuration of a simulation apparatus according to a first embodiment.

A simulation apparatus 10 of this embodiment is for predicting and designing behavior of a simulation model in which a simulated apparatus, a workpiece handled by the apparatus, an obstacle, and the like are set. Examples of simulation models include physical models that represent, as a mathematical formula, physical phenomena that act on an apparatus and the like, and dynamic models obtained from measured data of an actual machine by performing system identification, machine learning, or the like.

In this embodiment, the simulated apparatus is a robot provided with a robot arm. The robot arm has an elastic holder attached at the front end thereof. The robot is a so-called pick-and-place apparatus that picks up a workpiece using the holder, conveys the workpiece, and places the workpiece at its destination. In this embodiment, a case will be particularly described in which the holder is a suction pad, and the robot arm suctions and conveys a workpiece.

As shown in Fig. 1, the simulation apparatus 10 has a CPU (Central Processing Unit) 11, a ROM (Read Only Memory) 12, a RAM (Random Access Memory) 13, a storage 14, an input unit 15, a monitor 16, an optical disk driving apparatus 17, and a communication interface 18. The constituent elements are communicably connected to each other via a bus 19.

In this embodiment, the ROM 12 or the storage 14 stores a simulation program for executing a simulation. The CPU 11 is a central calculation processing unit, and executes various programs, and controls the constituent elements. Specifically, the CPU 11 reads out a program from the ROM 12 or the storage 14, and executes the program using the RAM 13 as a work area. The CPU 11 controls the above-described constituent elements and performs various types of calculation processing in accordance with programs recorded in the ROM 12 or the storage 14.

The ROM 12 stores various programs and various types of data. The RAM 13 temporarily stores a program or data as a work area. The storage 14 is constituted by an HDD (Hard Disk Drive) or an SSD (Solid State Drive), and stores various programs including an operating system and various types of data.

The input unit 15 includes a keyboard 151 and a pointing device such as a mouse 152, and is used for receiving various types of input. The monitor 16 is a liquid crystal display, for example, and displays various types of information such as information regarding whether or not the workpiece is suctioned successfully. The monitor 16 may also be a touch panel and function as the input unit 15. The optical disk driving apparatus 17 reads data stored in various recording media (e.g., a CD-ROM and a Blue-ray disk), and writes data to recording media.

The communication interface 18 is an interface for communicating with another device, and for example, the Ethernet (registered trademark) standard, FDDI, Wi-Fi (registered trademark), or the like is used.

Next, the functional configuration of a simulation apparatus will be described.

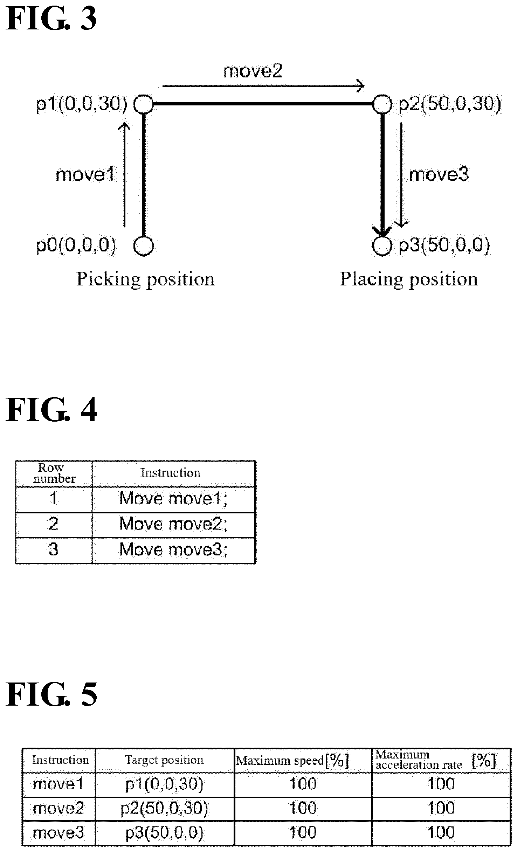

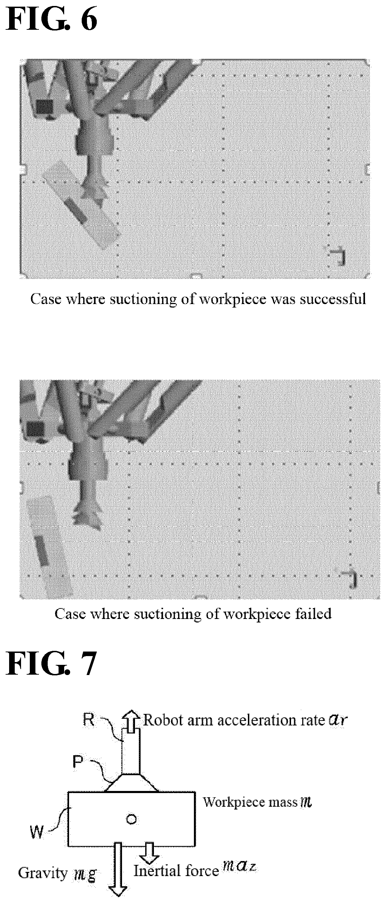

Fig. 2 is a block diagram showing an example of the functional configuration of a simulation apparatus. Fig. 3 is a diagram showing an example of coordinate positions at which a robot operates, Fig. 4 is a diagram showing an example of a motion program, and Fig. 5 is a diagram showing an example of a motion parameter. Fig. 6 is a diagram showing a state where a workpiece has been suctioned successfully and a state where a workpiece has not been suctioned successfully.

As shown in Fig. 2, the simulation apparatus 10 has, in its functional configuration, a motion program editing unit 101, a motion parameter editing unit 102, a motion instruction value calculation unit 103, a dynamics calculation unit 104, a load deriving unit 105, a drop determination unit 106, a 3D display unit 107, and an execution condition change unit 108. The functional constituent elements are each realized by the CPU 11 reading out a simulation program stored in the ROM 12 or the storage 14, loading the program to the RAM 13, and executing the program.

The motion program editing unit 101 accepts a desired operation of a simulated robot from the user, and accepts editing of an operation. The user can input or edit a motion program using the input unit 15 while looking at the monitor 16. Note that the motion program editing unit 101 may function as a motion planning unit for automatically generating an operation motion program of the apparatus from information regarding the arrangement of the apparatus and any obstacles.

In the motion program editing unit 101, a motion program as shown in Fig. 4 is set in order to cause a robot arm to execute an operation as shown in Fig. 3, for example. In an example of the operation shown in Fig. 3, an operation of the robot arm starting moving from a position p0, passing through a position p1 and a position p2, and reaching a position p3 is illustrated. The position p0 represents the coordinates (0,0,0), namely the origin in the xyz coordinate system. The position p1 is the position at the coordinates (0,0,30) that is separated from the position p0 in the z direction (height direction) by 30 units as defined in the coordinate system. The position p2 is the position at the coordinates (50,0,30) that is further separated from the position p1 by 50 in the x direction. The position p3 is the position at the coordinates (50,0,0) that is further separated from the position p2 by 30 in the -z direction. As described above, the operation shown in Fig. 3 is an operation consisting of three consecutive movements, namely vertical movement in which a robot arm is raised from an origin, a horizontal movement in which the robot arm maintains its height, and a vertical movement in which the robot arm is lowered.

The instructions for such an operation are input as a motion program to the motion program editing unit 101 as shown in Fig. 4, for example. The motion program shown in Fig. 4 includes operation instructions in three rows for executing the instructions in ascending order of row numbers. In the case of a pick-and-place apparatus, an operation of pick-up and place can be included in the motion program. Not only movement of a robot but also operations such as holding (suctioning) and releasing of a workpiece can be instructed based on a motion program.

The motion parameter editing unit 102 accepts editing of parameters of the operation according to the motion program, from the user. The user can input or edit motion parameters using the input unit 15 while looking at the monitor 16. The motion parameter defines the maximum speed and the maximum acceleration rate in an operation that is based on the instructions, for example, as shown in Fig. 5. The maximum speed and the maximum acceleration rate can be set as ratios relative to a reference speed and a reference acceleration rate that have been set in the robot in advance. By accepting input as a ratio relative to the reference speed, it is possible to avoid input of operation speeds that are impossible functionally or structurally without the user knowing a reasonable operation speed of the robot. Alternatively, the motion parameter editing unit 102 may accept the numerical values of physical amounts of a speed and an acceleration rate, in place of ratios. Note that, in the present specification, an "acceleration rate" is used as a term including both the concept of acceleration rate (positive value) during acceleration and the concept of deceleration rate (negative value) during deceleration. Therefore, the parameter "maximum acceleration rate" in Fig. 5 includes not only the maximum acceleration rate during acceleration but also the maximum deceleration rate during deceleration. Note that the parameters "maximum acceleration rate" and "maximum deceleration rate" do not need to be set uniformly as the same value, and may be set individually.

When start of the simulation is instructed, the motion instruction value calculation unit 103 reads an instruction of a first operation in a motion program obtained by the motion program editing unit 101. Next, the motion instruction value calculation unit 103 reads a motion parameter corresponding to the instruction from the motion parameters obtained by the motion parameter editing unit 102. The motion instruction value calculation unit 103 then sequentially calculates an operation instruction value that is used for the simulation, from the instruction and motion parameter that have been read, and outputs the value. Similarly, the motion instruction value calculation unit 103 sequentially reads the subsequent instruction and a motion parameter corresponding to the subsequent instruction, and outputs an operation instruction value.

The dynamics calculation unit 104 reads an operation instruction value that has been output from the motion instruction value calculation unit 103, three-dimensional CAD data of the robot, and simulation models including models respectively representing the workpiece, the suction pad (holder) and the robot arm. The dynamics calculation unit 104 calculates, from the operation instruction value, CAD data and simulation model that have been read, various types of data related to an operation of the simulation model in which dynamics are taken into consideration, and outputs the data. The three-dimensional CAD data of the robot and the simulation model may be stored in the storage 14 in advance, may be read from the optical disk driving apparatus 17, or may be obtained from an external device via the communication interface 18. Note that, a case has been described above in which three-dimensional CAD data is used, but the simulation can also be executed without using three-dimensional CAD data. For example, the simulation may be executed using two-dimensional CAD data, dimensional data of the robot, design data of the robot, or the like.

The load deriving unit 105 derives, from various types of data of a simulation model calculated by the dynamics calculation unit 104, a downward force that is applied to the workpiece when the simulation model moves vertically. In addition, a moment that acts on the suction pad according to the difference between the acceleration rate of the robot arm and the acceleration rate of the workpiece when the simulation model moves horizontally is derived from the various types of data of the simulation model calculated by the dynamics calculation unit 104. In the present specification, a moment that is generated in the suction pad is referred to as "load moment". The load deriving unit 105 may calculate downward force and a load moment based on an operation of the simulation model, or may derive downward force and a load moment from a table registered in advance. The load deriving unit 105 repeatedly derives the load moment, which changes depending on the operation of the simulation model during the simulation. The downward force and load moment will be described later in detail.

The drop determination unit 106 determines, based on the downward force and load moment derived from the load deriving unit 105, whether or not the workpiece will drop from the suction pad. When the simulation model moves vertically, the drop determination unit 106 determines whether or not the workpiece will drop, based on whether or not the downward force is larger than a threshold value (hereinafter, referred to as "threshold value Tv"). In addition, when the simulation model moves horizontally, the drop determination unit 106 determines whether or not the workpiece will drop, based on whether or not the load moment is larger than a threshold value (hereinafter, also referred to as "threshold value Th"). Note that, gravity is applied to the workpiece also during the horizontal movement, but the threshold value Th is a value that is defined in view of what degree of magnitude of a load moment in addition to gravity causes the workpiece to drop.

Both the threshold value Tv and the threshold value Th are values that are set in consideration of dropping the workpiece. For example, the threshold value Tv can be set as the downward force that occurs under execution conditions under which the workpiece did not drop when an actual machine of a robot equivalent to the simulation model was operated. Preferably, the threshold value Tv is set as a maximum value of downward force that occurs under execution conditions under which the workpiece did not drop when the execution conditions were changed and an actual machine of a robot equivalent to the simulation model was repeatedly operated. Similarly, the threshold value Th can be set as a load moment that is generated under execution conditions under which the workpiece did not drop when an actual machine of a robot equivalent to the simulation model was operated. Preferably, the threshold value Th is set as a maximum value of a load moment that is generated under execution conditions under which the workpiece did not drop when the execution conditions were changed and an actual machine of a robot equivalent to the simulation model was repeatedly operated. Note that the threshold value Tv and the threshold value Th do not necessarily need to be set by operating an actual machine. A configuration may also be adopted in which a database in which threshold values for respective workpieces are accumulated in advance is referenced, and a threshold value during vertical movement and a threshold value during horizontal movement of a workpiece similar to a workpiece to be conveyed are respectively set as the threshold value Tv and the threshold value Th.

The 3D display unit 107 displays, on the monitor 16, an operation of the simulation model calculated by the dynamics calculation unit 104. The 3D display unit 107 displays, on the monitor 16, a moving image showing a state where a robot conveys a workpiece over time, in a three-dimensional manner, for example. The display is not limited to three-dimensional display, and may be two-dimensional display or numerical values. If the drop determination unit 106 determines that the workpiece will not drop (if suctioning of the workpiece is successful), the 3D display unit 107 displays what is shown in the upper drawing in Fig. 6, on the monitor 16, for example. On the other hand, if the drop determination unit 106 determines that the workpiece will drop (if suctioning of the workpiece fails), the 3D display unit 107 displays what is shown in the lower drawing in Fig. 6, for example, on the monitor 16.

The execution condition change unit 108 performs processing for changing the execution conditions for the simulation. Processing for changing the execution conditions for the simulation may be processing for automatically changing the execution conditions for the simulation, or performing a presentation required for changing the execution conditions to the user. For example, after the 3D display unit 107 displaying a simulation result, the execution condition change unit 108 may accept input regarding whether or not to change the execution conditions, from the user. In this case, the execution condition change unit 108 displays, on the monitor 16, a message for requesting input regarding whether or not the execution conditions need to be changed, and prompts the user to perform input. Alternatively, in the case where the workpiece will drop according to a determination result of the drop determination unit 106, in other words, if the load moment is larger than the threshold value Th or downward force is larger than the threshold value Tv, the execution condition change unit 108 may automatically change the execution conditions. Alternatively, in the case where the workpiece will drop according to a determination result of the drop determination unit 106, the execution condition change unit 108 may also prompt the user to change the execution conditions.

Next, the downward force and the load moment will be described in detail.

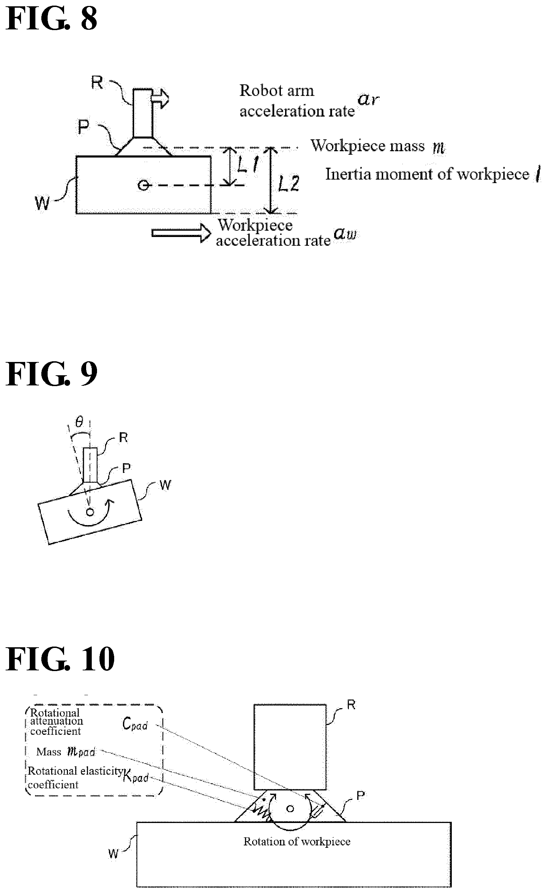

Fig. 7 is a diagram showing downward force that is applied to a workpiece, Fig. 8 is a diagram showing the difference in acceleration rate between a robot arm and a workpiece, Fig. 9 is a diagram showing rotary movement of a workpiece, and Fig. 10 is a diagram showing an example of a physical model including a robot arm, a holder, and a workpiece.

As shown in Figs. 7 to 10, a simulation model of the first embodiment is constituted by models respectively representing a workpiece, a suction pad that has suctioned the workpiece, and a robot arm that has the suction pad attached to its front end. As shown in Fig. 10, in the simulation model, the workpiece and the robot arm are rigid bodies, and the suction pad is an elastic body having a mass $m_{pad}$, a rotational attenuation coefficient $C_{pad}$, and a rotational elasticity coefficient $K_{pad}$.

First, the downward force will be described. When a robot arm R moves upward and downward in the vertical direction at an accelerated rate, downward force that acts on a workpiece W corresponds to the sum of gravity and inertial force. Specifically, as shown in Fig. 7, if the robot arm R moves in the vertical direction in an accelerated manner at an acceleration rate $a_r$, a force corresponding to the sum of gravity $m \times g$ and the inertial force $m \times a_z$ is applied to the centroid of the workpiece W included in the simulation model. Here, m represents the mass of the workpiece W, g represents the gravity acceleration rate, and $a_z$ represents an acceleration rate of the workpiece W. If the downward force corresponding to the sum of the gravity $m \times g$ and the inertial force $m \times a_z$ does not exceed the threshold value Tv, it is determined that the workpiece W will not drop, and if the sum is larger than the threshold value Tv, it is determined that the workpiece W will drop. The threshold value Tv is set as a maximum value of downward force that occurs under execution conditions under which the workpiece did not drop when the execution conditions were changed and an actual machine of a robot equivalent to the simulation model was repeatedly operated.

Next, the load moment will be described. A case will be described in which the robot arm R moves in the horizontal direction in an accelerated manner at the acceleration rate $a_r$ in accordance with an operation instruction as shown in Fig. 8. Here, there is an elastic suction pad P between the robot arm R and the workpiece W. Therefore, during accelerated movement, the suction pad P deforms, and the workpiece W rotates relative to an imaginary rotation axis of the suction pad P serving as a rotation center as shown in Fig. 7, causing a difference in acceleration rate between the workpiece W and the robot arm R. Here, the acceleration rate of the workpiece is denoted by $a_w$, the distance between the rotation center and the centroid of the workpiece W is denoted by L1, and the distance between the rotation center and a bottom portion of the workpiece is denoted by L2. In addition, an inertia moment of the workpiece W of a rotation portion of the simulation model is denoted by I. A rotation angle of the workpiece W relative to the vertical direction is denoted by $\theta$. In the inertial coordinates system in which the workpiece W and the robot arm R move, a moment $\tau$ that is generated in the workpiece W is represented as Equation 1 below.

$$\tau = I\ddot{\theta} \quad \dots (1)$$

The angular acceleration rate $\ddot{\theta}$ is approximated by Equation 2 below.

$$\ddot{\theta} = \frac{a_w - a_r}{L2} \quad \dots (2)$$

If Equation 2 is inserted into Equation 1, Equation 3 below is obtained.

$$\tau = \frac{I}{L2}(a_w - a_r) \quad \dots (3)$$

As indicated by Equation 3, the moment $\tau$ that is generated in the workpiece W is represented as the difference between an acceleration rate $a_w$ of the workpiece W and the acceleration rate $a_r$ of the robot arm R. The moment $\tau$ can be regarded as force that is applied to the suction pad P as a load, namely a load moment. Therefore, it is possible to determine, based on the magnitude of the load moment represented by Equation 3, whether or not holding of the workpiece W by the suction pad P will be released and the workpiece W will drop.

On the other hand, the load moment can also be considered in a translation coordinate system that moves along with the robot arm R. In the translation coordinate system, the moment $\tau$ that is generated in the workpiece is represented by a motion equation of rotation indicated as Equation 4 below. M is the load moment.

$$\tau = I\ddot{\theta} = M + ma_r L1 \quad \dots (4)$$

In the translation coordinate system, the moment $\tau$ can be represented as the sum of a moment $ma_r L1$ that is generated due to the inertial force acting on the workpiece W due to the horizontal inertial force that acts in the horizontal direction due to accelerated movement (horizontal movement) of the robot arm R and the force that is applied to the suction pad P as a load, namely the load moment M. In light of the translation coordinate system as in Equation 4, it is possible to more accurately calculate the load moment M that is applied to the suction pad P than in Equation 1 since the moment that is generated due to inertial force acting on the workpiece W is taken into consideration.

If Equation 2 is inserted into Equation 4, and Equation 4 is rearranged into a formula of the load moment M, Equation 5 is obtained. Therefore, if the acceleration rate $a_r$ is given, the acceleration rate $a_w$ is obtained from Equation 6 below, and thus the load moment can be obtained from Equation 5.

$$M = \frac{I}{L2}a_w - \left(\frac{I}{l} + mL1\right)a_r \quad \dots (5)$$

A case will be described below in which the load moment M is represented by Equation 5. If the load moment M does not exceed the above-described threshold value Th, the workpiece W will not drop, and if the load moment M is larger than the threshold value Th, the workpiece W will drop. The threshold value Th is set as a maximum value of a load moment that is generated under execution conditions under which the workpiece did not drop when the execution conditions were changed and an actual machine of a robot equivalent to the simulation model was repeatedly operated.

Note that, in simulation, the acceleration rate $a_w$ of the workpiece W in Equations 3 and 5 above is represented by Equation 6 below using a transfer function G(s) between the suction pad P and the workpiece W.

$$a_w = G(s) \times a_r \ldots (6)$$

Here, the transfer function G(s) is represented by Equation 7 below, which represents the suction pad P as a physical model shown in Fig. 10. The physical model is constructed by extracting the parameters that affect the acceleration rate $a_w$ of the workpiece W from operation data of an actual machine. For example, in Fig. 10, when the robot arm R is moved in an accelerated manner at the acceleration rate $a_r$, the mass $m_{pad}$, the rotational attenuation coefficient $C_{pad}$, and the rotational elasticity coefficient $K_{pad}$ of the suction pad P that affect the acceleration rate $a_w$ of the workpiece W are extracted as parameters of a suction pad model. By constructing the suction pad model particularly using only parameters that affect the acceleration rate $a_w$ of the workpiece W, it is possible to reduce external influence other than the acceleration rate $a_w$, and more accurately obtain the acceleration rate $a_w$. The transfer function G(s) is represented as in Equation 7, for example.

$$G(s) = \frac{C_{pad}s + K_{pad}}{m_{pad}s^2 + C_{pad}s + K_{pad}} \ldots (7)$$

Next, an action of the simulation apparatus 10 will be described.

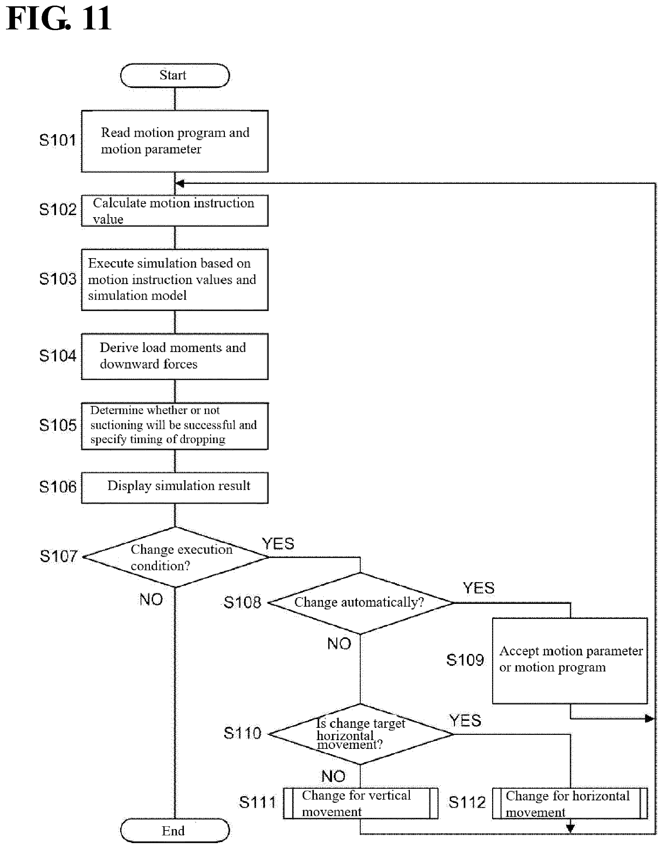

Fig. 11 is a flowchart showing a flow of an operation that is executed by the CPU of the simulation apparatus. Simulation processing is performed by the CPU 11 reading out a simulation program from the ROM 12 or the storage 14, loading the program to the RAM 13, and executing the program.

The CPU 11 reads a motion program and a motion parameter (step S101), and calculates a motion instruction value by functioning as the motion instruction value calculation unit 103 (step S102). As illustrated in Fig. 5, the maximum acceleration rates for moves 1 to 3 are used as motion instruction values as an example of an operation instruction.

The CPU 11 functions as the dynamics calculation unit 104 and executes the simulation based on the motion instruction values and the simulation model (step S103). The CPU 11 functions as the load deriving unit 105 and calculates all of the downward forces and all of the load moments M that are based on Equations 5 and 6, the downward forces and the load moments M changing during simulation (step S104).

The CPU 11 functions as the drop determination unit 106 and determines whether or not the workpiece W will be suctioned successfully, according to whether or not, in during simulation, there is a timing when downward force exceeds the threshold value Tv or a timing when the load moment exceeds the threshold value Th (step S105). Furthermore, if it is determined that suctioning will fail, the CPU 11 specifies the timing when the workpiece W will drop.

The CPU 11 functions as the 3D display unit 107 and displays a result of the simulation on the monitor 16 (step S106). Here, the CPU 11 displays an operation of the simulation model that is based on the simulation, as a moving image. In the moving image, an image as shown in Fig. 6 is displayed according to a determination result on whether or not suctioning of the workpiece W will be successful. If it is determined that suctioning of the workpiece W will fail, an image in which the workpiece W is dropping is displayed at the timing when the workpiece W drops. Furthermore, regarding the determination result in step S105 on whether or not the workpiece W will be suctioned successfully, the CPU 11 may display, on the monitor 16, a message "the workpiece will drop during horizontal movement" or a message "the workpiece will drop during vertical movement", for example.

The CPU 11 functions as the execution condition change unit 108 and checks whether or not the user desires to change the execution conditions for simulation (step S107). As a method for checking whether or not the user desires to change the execution conditions, the CPU 11 displays a message "do you want to change the execution conditions?" on the monitor 16, for example, and performs a presentation and prompts the user to select "Yes" or "No". Note that changing the execution conditions for simulation includes changing the above-described motion parameters and changing the motion program. In step S107, in particular, if it is determined that suctioning will fail in the determination in step S105 on whether or not suctioning will be successful, the user may be prompted to change the execution conditions in order to prevent the workpiece from dropping (such that the downward force does not exceed the threshold value Tv, and the load moment M does not exceed the threshold value Th). Therefore, the CPU 11 may display, for example, a message "please change the execution conditions in order to prevent the workpiece from dropping", on the monitor 16.

If the user does not desire to change the execution conditions (step S107: NO), the CPU 11 ends the simulation processing. If the user desires to change the execution conditions (step S107: YES), the CPU 11 determines whether the execution conditions are to be changed manually or automatically (step S108). As a method for checking whether or not the execution conditions are to be changed manually, for example, the CPU 11 displays, on the monitor 16, a message "do you want to manually change the execution conditions for simulation?", and prompts the user to select "YES" or "NO".

If the user desires to manually change the execution conditions (step S108: YES), the CPU 11 functions as the motion program editing unit 101 or the motion parameter editing unit 102 and accepts editing of the motion program or the motion parameters (step S109). Here, the CPU 11 may accept editing of both the motion program and the motion parameters. The CPU 11 then returns the procedure to step S102, and performs the simulation in accordance with the motion program and the motion parameters that have been edited based on the accepted editing.

If the user desires to automatically change the execution conditions (step S108: NO), the CPU 11 determines whether or not what is changed is horizontal movement (step S110). As a method for checking whether or not what is changed is horizontal movement, for example, the CPU 11 displays a message "do you want to change the execution conditions for horizontal movement?", on the monitor, and prompts the user to select "YES" or "NO". The user can determine what is changed by looking at the display of the simulation result in step S106.

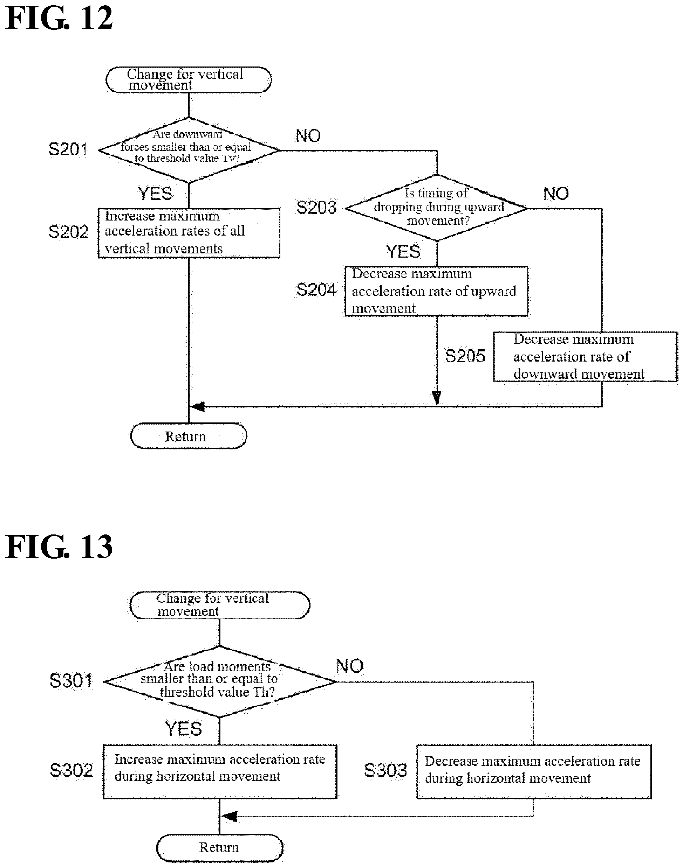

If the user does not desire to change the execution conditions for horizontal movement (step S110: NO), the CPU 11 changes the execution conditions for vertical movement (step S111). On the other hand, if the user desires to change the execution conditions for horizontal movement (step S110: YES), the CPU 11 changes the execution conditions for horizontal movement (step S112). The CPU 11 then returns the processing to step S102, and performs a simulation that is based on the execution conditions that have been automatically changed. Processing for changing the execution conditions for vertical movement and the execution conditions for horizontal movement will be described in detail with reference to Figs. 12 and 13. A case will be described below in which the maximum acceleration rate $a_r$ is used as an example of the execution conditions to be changed.

First, changing the maximum acceleration rate during vertical movement will be described.

Fig. 12 is a flowchart showing a flow of processing for changing the maximum acceleration rate during vertical movement.

As shown in Fig. 12, the CPU 11 determines whether or not all of the downward forces calculated in step S104 are smaller than or equal to the threshold value Tv (step S201).

If all of the downward forces are smaller than or equal to the threshold value Tv (step S201: YES), the CPU 11 increases the maximum acceleration rates of all of the vertical movements of the robot arm R by a predetermined value (step S202). All of the vertical movements include both upward movement and downward movement. The maximum acceleration rate also includes the maximum deceleration rate. The predetermined value is appropriately set according to an accuracy requested for the robot arm R. For example, if an accuracy of the maximum acceleration rate of 0.1% is requested, the predetermined value is 0.1%. If the maximum acceleration rate is represented in a physical amount, the predetermined value is also set as a physical amount.

If there is a downward force that is larger than the threshold value Tv (step S201: NO), the CPU 11 determines whether or not the timing of dropping when downward force exceeds the threshold value Tv is during an upward movement of the robot arm R (step S203). The CPU 11 can determine which section the timing of dropping specified in step S105 corresponds to, from a plurality of sections of the conveyance route of the robot arm R divided based on the operation instructions with respect to the robot arm R (divided according to changes in the direction in which the robot arm R travels). By checking, from the motion program, the operation of the robot arm R in the section to which the timing of dropping corresponds to, it is possible to determine whether or not the timing of dropping is during an upward movement.

If the timing of dropping is during an upward movement (step S203: YES), the CPU 11 decreases the maximum acceleration rate of upward movement by a predetermined value (step S204). If the timing of dropping is during a downward movement (step S203: NO), the CPU 11 decreases the maximum acceleration rate of downward movement by a predetermined value (step S205). In steps S204 and S205, the maximum acceleration rate includes the maximum deceleration rate. The predetermined value is similar to that in step S202.

Next, changing the maximum acceleration rate during horizontal movement will be described.

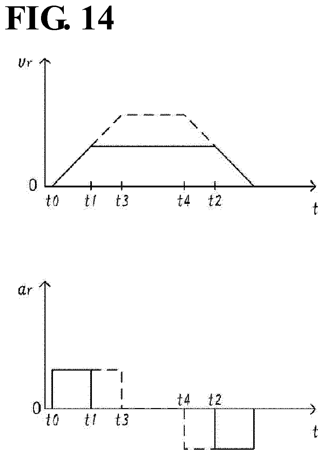

Fig. 13 is a flowchart showing a flow of processing for changing the maximum acceleration rate during horizontal movement. Fig. 14 is a diagram showing changes in speed and acceleration rate in the case where the acceleration time is changed.

As shown in Fig. 13, the CPU 11 determines whether or not all of the load moments calculated in step S104 are smaller than or equal to the threshold value Th (step S301).

If all of the load moments are smaller than or equal to the threshold value Th (step S301: YES), the CPU 11 increases the maximum acceleration rate of the robot arm R during horizontal movement by a predetermined value (step S302). The maximum acceleration rate includes the maximum deceleration rate. The predetermined value is appropriately set according to an accuracy requested for the robot arm R. For example, if an accuracy of the maximum acceleration rate of 0.1% is requested, the predetermined value is 0.1%. If the maximum acceleration rate is represented as a physical amount, the predetermined value is also set as a physical amount.

In the case where there is a load moment that is larger than the threshold value Th (step S301: NO), the CPU 11 decreases the maximum acceleration rate of the robot arm R during horizontal movement by a predetermined value (step S303).

An example has been described above in which the maximum acceleration rate is changed. However, in the case where an acceleration rate that occurs changes by changing at least one of the maximum speed, acceleration time, deceleration time, and jerk, downward force and the load moment M also change. Therefore, at least one of the maximum speed, acceleration time, deceleration time, and jerk may be changed in place of the maximum acceleration rate.

Accordingly, as described above, the load moment can be calculated using Equation 5 (or Equation 3). Here, it is assumed that the maximum speed has been changed as an execution condition while the acceleration rate is kept constant as shown in Fig. 14. In Fig. 14, solid lines indicate the relationship between speed and time of the robot arm R before a change, and the relationship between acceleration rate and time of the robot arm R after a change. Dotted lines indicate the relationship between speed and time of the robot arm R after a change, and the relationship between acceleration rate and time of the robot arm R after a change. As shown in the upper and lower drawings in Fig. 14, if the maximum speed changes even in the case where the acceleration rate does not change, the acceleration (deceleration) time changes, and a physical amount represented as the product of acceleration rate and time changes. Accordingly, force that is applied to the workpiece W also changes, and the acceleration rate $a_w$ of the workpiece W also changes. Therefore, for example, by preparing a transfer function G in which the physical amount represented as the product of the acceleration rate and a time serves as input, and the acceleration rate $a_w$ of the workpiece W serves as output, a load moment can be calculated.

In addition, in Fig. 13, as a change of the execution conditions for simulation, a motion parameter is changed. However, as a change of the execution conditions for simulation, also the simulation model may be changed. Changing the simulation model includes changing the design of the suction pad P included in the simulation model, for example. Changing the design of the suction pad P includes changing the suction pressure, the suction time, the pad shape (e.g., an ordinally bowl-like shape, bellows shape, and the size of diameter), the pad material (e.g., nitrile rubber and silicon), the position at which the pad is suctioned, and the number of pads, for example. In the case of changing the suction pad P, the threshold value Th before a change cannot be used any longer. This is because the threshold value Th depends on the design conditions of the suction pad. Therefore, it is necessary to change the design of the suction pad of an actual machine within a range in which change is envisioned, or a range in which change is allowed, conduct a dropping test, and prepare the threshold value Th for each design pattern of the suction pad. If the design of the suction pad P is changed at the stage of simulation, the threshold value Th corresponding to the changed design is used, and is compared with the load moment.

The motion parameters may be changed as shown in Fig. 13 or the simulation model may be changed as described above, as appropriate according to a transportation time of the workpiece W, or a degree to which a suction trace of the suction pad is allowed, for example. If the degree to which a suction trace of the suction pad is allowed is large, the suction pressure and suction time may be adjusted preferentially.

According to the simulation apparatus 10 of the first embodiment above, the following effects are obtained. By comparing the load moment with the threshold value Th, the simulation apparatus 10 determines whether or not suction will be successful, in other words, whether the workpiece will drop. Therefore, a simulation in which dropping the workpiece is taken into consideration can be provided to the user. In particular, in steps S108 and S110, presentation required for changing the execution conditions is performed, and guidance for selection for changing the execution conditions that is performed by the user is given. Therefore, the user can appropriately select a change of the execution conditions in accordance with the guidance.

In addition, the simulation apparatus 10 can derive a load moment as a difference between a moment that is generated in the workpiece W and a (apparent) moment that is generated due to an inertial force that acts on the workpiece W, from the viewpoint of the translation coordinate system in which the robot arm moves. In this case, a load moment can more accurately represent a load that is applied to the suction pad P, compared with a case where a moment that is generated in the workpiece W is defined as a load moment. Therefore, it is possible to more accurately determine whether or not the workpiece W will drop, in consideration of a load that is applied to the suction pad P.

In addition, the simulation apparatus 10 decreases the maximum acceleration rate, assuming that an execution condition for simulation is the maximum acceleration rate, if the load moment is larger than a threshold value. By reducing the maximum acceleration rate such that a load moment that is smaller than threshold value is obtained, it is possible to reliably prevent the workpiece W from dropping.

In addition, assuming that an execution condition for simulation is the maximum acceleration rate, the simulation apparatus 10 increases the maximum acceleration rate if the load moment does not exceed a threshold value. Therefore, the maximum acceleration rate can be changed such that the load moment approaches the threshold value. If the load moment approaches the threshold value as much as possible within a range in which the threshold value is not exceeded, a limit value of the maximum acceleration rate that can be achieved while preventing the workpiece from dropping is obtained. The maximum acceleration rate can be increased to its limit, and thus, as a result, it is possible to shorten a takt time during which the workpiece W is conveyed.

In addition, if the load moment is larger than the threshold value, the simulation apparatus 10 determines that the workpiece will drop. Therefore, it is possible to mechanically perform determination regarding dropping, regardless of determination of the user.

The simulation apparatus 10 is not limited to the above-described embodiment, and various modifications can be made. For example, presentation may be performed to the user by skipping step S105 in Fig. 11, and simply displaying the value of the load moment in place of displaying a simulation result in step S106. An adept user (a user adept in load moments) can determine whether or not the workpiece W will drop, just by checking such numerical value, and can appropriately perform input regarding whether or not to change the execution conditions. Further modification will be described below.

Second Embodiment

In the first embodiment, the user determines whether or not to change the execution conditions. In a second embodiment, even if the user does not determine to change the execution conditions, an optimum execution condition is set automatically.

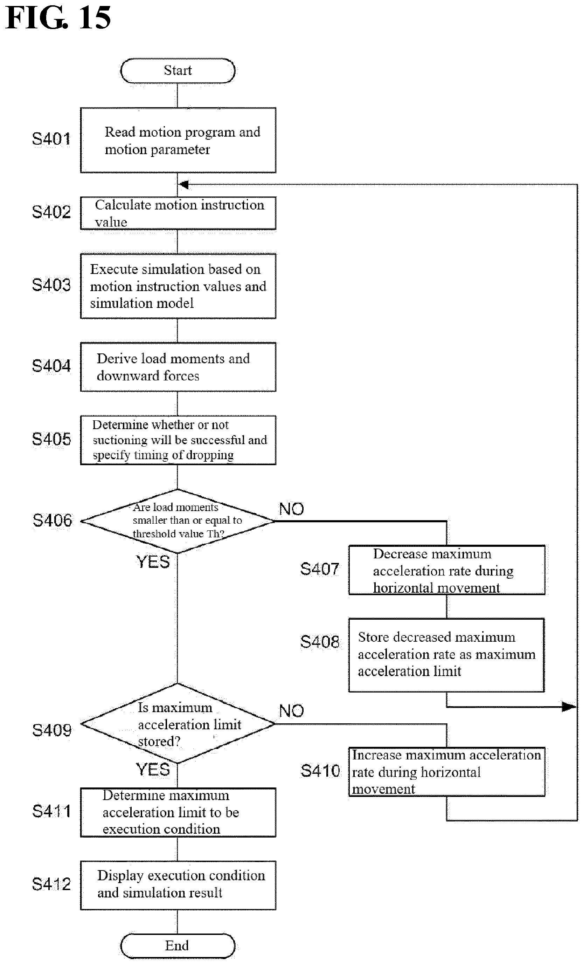

Fig. 15 is a flowchart showing the flow of an operation that is executed by a CPU of a simulation apparatus according to the second embodiment. Simulation processing is performed by a CPU 11 reading out a simulation program from a ROM 12 or a storage 14, loading the program to a RAM 13, and executing the program.

Steps S401 to S405 are similar to steps S101 to S105 shown in Fig. 11, and thus its description is omitted.

The CPU 11 determines whether or not all of the load moments derived in step S404 are smaller than or equal to a threshold value Th (step S406). If there is a load moment that is larger than the threshold value Th (step S406: NO), the CPU 11 decreases the maximum acceleration rate during horizontal movement of a robot arm R by a predetermined value (step S407). The CPU 11 records the decreased maximum acceleration rate as a maximum acceleration limit (step S408), and returns the procedure to step S402 for simulation in which the decreased maximum acceleration rate is used. Note that if the maximum acceleration limit has been stored before, the CPU 11 updates the maximum acceleration limit to the maximum acceleration rate that has been decreased in present step S407.

If all of the load moments are smaller than or equal to the threshold value Th (step S406: YES), the CPU 11 determines whether or not the maximum acceleration limit is stored (step S409). If the maximum acceleration limit is not stored (step S409: NO), the CPU 11 increases the maximum acceleration rate during horizontal movement of the robot arm R by a predetermined value (step S410). The CPU 11 returns the procedure to step S402 for simulation in which the increased maximum acceleration rate is used.

If the maximum acceleration limit is stored (step S409: YES), the CPU 11 determines the maximum acceleration limit to be a final execution condition (step S411), and displays the execution conditions and the simulation result on a monitor 16 (step S412).

As described above, according to the simulation apparatus 10 of the second embodiment, even if the user does not instruct to change the execution conditions, the maximum acceleration rate is increased/decreased such that the load moment does not exceed the threshold value, and thus it is possible to automatically determine an optimum execution condition.

In particular, in the simulation apparatus 10 of the second embodiment, if the load moment is larger than the threshold value Th, simulation in which the maximum acceleration rate is decreased by the predetermined value each time is repeated, and every time the maximum acceleration rate is decreased, the decreased maximum acceleration rate is stored as the maximum acceleration limit. If the load moment falls below the threshold value Th as a result of decreasing the maximum acceleration rate, and executing simulation, the maximum acceleration limit is determined to be an execution condition, and thus the simulation apparatus 10 can present, as final execution conditions, execution conditions under which the load moment does not exceed the threshold value Th, and is closest to the threshold value Th. In addition, if the load moment does not exceed the threshold value Th, and the maximum acceleration limit is not stored, it is possible to increase the maximum acceleration rate, and search for a limit value of the maximum acceleration rate.

Third Embodiment

In the first embodiment, a case has been described in which the robot arm R performs horizontal movement and vertical movement. In particular, a case has been described in which the vertical acceleration rate of the robot arm R during horizontal movement is not taken into consideration. In a third embodiment, a load moment is derived considering that the acceleration rates of the robot arm R in the horizontal direction and in the vertical direction act on the workpiece. For example, in the case where the robot arm R moves in a direction inclined to the horizontal direction, the acceleration rate in the horizontal direction and the acceleration rate in the vertical direction act on the workpiece W.

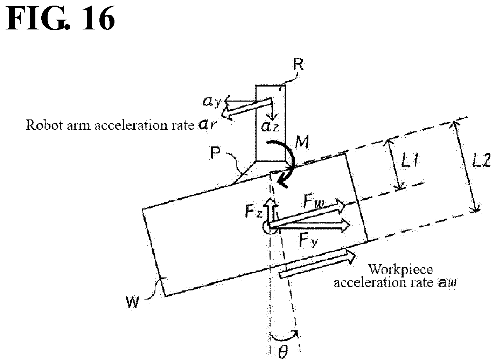

Fig. 16 is a diagram showing the forces that act on a workpiece.

In Fig. 16, the acceleration rate of the robot arm R in the horizontal direction is denoted by $a_y$, and the acceleration rate in the vertical direction is denoted by $a_z$. In addition, the composite inertial force that is applied to the workpiece W is denoted by $F_w$, the inertial force in the horizontal direction obtained by decomposing the composite inertial force $F_w$ is denoted by $F_y$, and the inertial force in the vertical direction is denoted by $F_z$. The rotation angle of the workpiece W relative to the vertical direction is denoted by $\theta$. In addition, the mass of the workpiece W is denoted by m, an inertia moment that acts on a rotating portion of the simulation model is denoted by I. The distance between the rotation center of the workpiece W and the centroid of the workpiece W is denoted by L1, and the distance between the rotation center and a front end of the workpiece W is denoted by L2.

The inertial force $F_y$ in the horizontal direction is represented as $F_y = m \times a_y$, and the inertial force $F_z$ in the vertical direction is represented as $F_z = m \times a_z$.

The arm length of a moment that is generated due to inertial force in the horizontal direction is represented as $L1\sin\theta$, and the arm length of a moment that is generated due to inertial force in the vertical direction is represented as $L1\cos\theta$, and in the case where $\theta$ is small, those arm lengths are respectively represented as $L1\theta$ and $L1$. Therefore, in a translation coordinate system that moves along with the robot arm R, a moment $\tau$ that is generated in the workpiece W is represented by a motion equation of rotation represented in Equation 8 below.

$$\tau = I\ddot{\theta} = M + ma_y L1 + ma_z L1\theta \quad \dots (8)$$

The difference between the moment $\tau$ and the above-described moment is the force that is applied to the suction pad P as a load, namely the load moment M.

If Equation 2 above is inserted into Equation 8, and Equation 8 is rearranged into a formula of the load moment M, Equation 9 is obtained.

$$M = \frac{I}{L2}a_w - \left(\frac{I}{L2} + mL1\right)a_y - mL1a_z\theta \quad \dots (9)$$

The value of an estimated swinging angle of the workpiece prepared in advance by being input by the user or the like is used as $\theta$. Alternatively, the swinging angle may be calculated through simulation. The acceleration rate $a_w$ of the workpiece W can also be calculated using a transfer function G(s) similar to the first embodiment.

Therefore, the simulation apparatus 10 can calculate the load moment M using Equation 8 above even when the robot arm R is moved in a direction intersecting the horizontal direction. By comparing the load moment M with the threshold value Th, the simulation apparatus 10 can determine whether or not the workpiece W will drop, and present execution conditions for simulation under which the workpiece W does not drop.

Note that, in the above embodiments, cases have been described in which a suction pad is used as a holder. However, the holder is not limited to a suction pad, and as long as the holder is elastic, the present invention can also be applied to a case where a chuck for gripping the workpiece or the like is used.

Note that simulation processing that is executed by a CPU reading software (a program) in the above embodiments may be executed by various processors other than a CPU. Examples of such a processor in this case include a PLD (Programmable Logic Device) whose circuit configuration can be changed after being manufactured, such as an FPGA (Field-Programmable Gate Array), a dedicated electric circuit that is a processor having a circuit configuration designed so as to be dedicated for executing specific processing, such as ASIC (Application Specific Integrated Circuit), and the like. In addition, simulation processing may be executed by one of these various processors, or may be executed by a combination of two or more processors of the same type or different types (e.g., a plurality of FPGAs, and a combination of a CPU and an FPGA). In addition, more specifically, the hardware structures of these various processors are electric circuits in which circuit elements such as a semiconductor element are combined.

In addition, in the above embodiments, a mode has been described in which a simulation program is stored (installed) in the storage 14 or the ROM 12 in advance, but there is not limitation thereto. The program may also be stored in a recording medium such as a CD-ROM (Compact Disk Read Only Memory), a DVD-ROM (Digital Versatile Disk Read Only Memory), or a USB (Universal Serial Bus) memory. In addition, a mode may be adopted in which the program is downloaded from an external apparatus via a network.

LIST OF REFERENCE NUMERALS

| 10 | Simulation apparatus |
| 101 | Motion program editing unit |
| 102 | Motion parameter editing unit |
| 103 | Motion instruction value calculation unit |
| 104 | Dynamics calculation unit |
| 105 | Load deriving unit |
| 106 | Drop determination unit |
| 107 | 3D display unit |
| 108 | Execution condition change unit |

**Claims**

1. A simulation apparatus (10) comprising:

   a deriving unit configured to derive a load moment that is generated in an elastic holder that holds a workpiece (W) due to a difference between an acceleration rate of a robot arm (R) to which the holder is attached and an acceleration rate of the workpiece (W), when executing a simulation in which a simulation model including models of the workpiece (W), the holder, and the robot arm (R) is accelerated based on an operation instruction, the deriving unit being configured to derive the load moment by subtracting a moment that is generated due to inertial force from a moment that is generated in the workpiece (W); and
   an execution condition change unit (108) configured to perform processing for changing, if the load moment derived by the deriving unit is larger than a threshold value, an execution condition of the simulation such that the load moment derived by the deriving unit does not exceed the threshold value.

2. The simulation apparatus (10) according to claim 1,
   wherein the moment that is generated due to the inertial force is a moment that is generated due to horizontal inertial force acting in a horizontal direction, and in a case where the accelerated movement is movement in a direction inclined in the horizontal direction, is a sum of a moment that is generated due to horizontal inertial force acting in the horizontal direction and a moment that is generated due to vertical inertial force acting in a vertical direction.

3. The simulation apparatus (10) according to any one of claims 1 and 2,
   wherein in a case where the execution condition is a maximum acceleration rate, if the load moment derived by the deriving unit is larger than the threshold value, the execution condition change unit (108) performs processing for decreasing the maximum acceleration rate.

4. The simulation apparatus (10) according to any one of claims 1 to 3,
   wherein in a case where the execution condition is a maximum acceleration rate, if the load moment derived by the deriving unit does not exceed a threshold value, the execution condition change unit (108) performs processing for increasing the maximum acceleration rate.

5. The simulation apparatus (10) according to any one of claims 1 to 4,
   wherein in a case where processing for changing the execution condition is repeated, the execution condition change unit (108) presents, as a final execution condition, an execution condition under which the load moment derived by the deriving unit does not exceed the threshold value and is closest to the threshold value.

6. The simulation apparatus (10) according to any one of claims 1 to 5, further comprising:

   a determination unit configured to determine that holding of the workpiece (W) by the holder is released if the load moment derived by the deriving unit is larger than the threshold value.

7. The simulation apparatus (10) according to claim 6,
   wherein the execution condition change unit (108) changes the execution condition for simulation or performs a presentation required for changing the execution condition, with respect to a section including a timing at which it is determined by the determination unit that the workpiece (W) drops, from a plurality of sections that are separated based on operation instructions regarding the robot arm (R) in a conveyance route of the robot arm (R).

8. The simulation apparatus (10) according to any one of claims 1 to 7,
   wherein the threshold value is set as a maximum value of a load moment that is generated under an execution condition under which holding of the workpiece (W) by the holder is not released when an execution condition is changed, and an actual machine provided with a robot arm (R) equivalent to the simulation model is repeatedly operated.

9. The simulation apparatus (10) according to any one of claims 1 to 8, further comprising:

   a display unit configured to display a simulation result that satisfies the execution condition.

10. A simulation method comprising:

    a step of deriving a load moment that is generated in an elastic holder that holds a workpiece (W) due to a difference between an acceleration rate of a robot arm (R) to which the holder is attached and an acceleration rate of the workpiece (W), when executing a simulation in which a simulation model including models of the workpiece (W), the holder, and the robot arm (R) is accelerated based on an operation instruction, the load moment being derived by subtracting a moment that is generated due to inertial force from a moment that is generated in the workpiece (W); and
    a step of performing processing for changing, if the load moment derived in the step of deriving is larger than a threshold value, an execution condition of the simulation such that the load moment derived in the step of deriving does not exceed the threshold value.

11. A simulation program for causing a computer to execute:

    a step of deriving a load moment that is generated in an elastic holder that holds a workpiece (W) due to a difference between an acceleration rate of a robot arm (R) to which the holder is attached and an acceleration rate of the workpiece (W), when executing a simulation in which a simulation model including models of the workpiece (W), the holder, and the robot arm (R) is accelerated based on an operation instruction, the load moment being derived by subtracting a moment that is generated due to inertial force from a moment that is generated in the workpiece (W); and
    a step of performing processing for changing, if the load moment derived in the step of deriving is larger than a threshold value, an execution condition of the simulation such that the load moment derived in the step of deriving does not exceed the threshold value.

# FIG. 1

# FIG. 2

# FIG. 3

# FIG. 4

| Row number | Instruction |
|---|---|
| 1 | Move move1; |
| 2 | Move move2; |
| 3 | Move move3; |

# FIG. 5

| Instruction | Target position | Maximum speed[%] | Maximum acceleration rate [%] |
|---|---|---|---|
| move1 | p1(0,0,30) | 100 | 100 |
| move2 | p2(50,0,30) | 100 | 100 |
| move3 | p3(50,0,0) | 100 | 100 |

# FIG. 6

Case where suctioning of workpiece was successful

Case where suctioning of workpiece failed

# FIG. 7

R — Robot arm acceleration rate $a_r$

P

Workpiece mass $m$

W

Gravity $mg$    Inertial force $ma_z$

# FIG. 8

R

P

Robot arm
acceleration rate $a_r$

Workpiece mass $m$

Inertia moment of workpiece $I$

W

Workpiece
acceleration rate $a_w$

# FIG. 9

$\theta$

R

P

W

# FIG. 10

Rotational
attenuation $C_{pad}$
coefficient

Mass $m_{pad}$

Rotational elasticity $K_{pad}$
coefficient

R

P

W

Rotation of workpiece

# FIG. 11

Start

S101 — Read motion program and motion parameter

S102 — Calculate motion instruction value

S103 — Execute simulation based on motion instruction values and simulation model

S104 — Derive load moments and downward forces

S105 — Determine whether or not suctioning will be successful and specify timing of dropping

S106 — Display simulation result

S107 — Change execution condition?
YES
NO

S108 — Change automatically?
YES
NO

S109 — Accept motion parameter or motion program

S110 — Is change target horizontal movement?
YES
NO

S111 — Change for vertical movement

S112 — Change for horizontal movement

End

## FIG. 12

```
                    ( Change for vertical )
                    (     movement      )
                            │
                          ╱   ╲
                        ╱ Are downward ╲          NO
        S201        ╱ forces smaller than or equal ╲ ──────────────────────┐
                      ╲ to threshold value Tv? ╱                           │
                        ╲       ╱                                          │
                          ╲   ╱                                           │
                         YES │                                          ╱   ╲
                             │                               ╱   Is timing of   ╲    NO
        ┌────────────────────┴──┐              S203      ╱ dropping during upward ╲ ───────┐
        │ Increase maximum      │                         ╲        movement?      ╱        │
 S202   │ acceleration rates of all │                       ╲                   ╱          │
        │ vertical movements    │                             ╲   YES   ╱                  │
        └────────────────────┬──┘                               │                         │
                             │                         ┌─────────┴──────────┐              │
                             │                         │ Decrease maximum    │             │
                             │                  S204   │ acceleration rate of upward │     │
                             │                         │ movement            │             │
                             │                         └─────────┬──────────┘              │
                             │                                   │        ┌────────────────┴──┐
                             │                                   │        │ Decrease maximum   │
                             │                            S205   │        │ acceleration rate of │
                             │                                   │        │ downward movement  │
                             │                                   │        └────────────────┬──┘
                             │◄──────────────────────────────────┴─────────────────────────┘
                             │
                    (   Return   )
```

## FIG. 13

```
                    ( Change for vertical )
                    (     movement      )
                            │
                          ╱   ╲
                        ╱ Are load moments ╲       NO
        S301        ╱ smaller than or equal to ╲ ──────────────────────┐
                      ╲ threshold value Th? ╱                          │
                        ╲       ╱                                      │
                          ╲   ╱                                        │
                         YES │                                        │
        ┌────────────────────┴──────────────┐           ┌─────────────┴─────────────────────┐
        │ Increase maximum acceleration rate │           │ Decrease maximum acceleration rate │
 S302   │ during horizontal movement         │    S303   │ during horizontal movement         │
        └────────────────────┬──────────────┘           └─────────────┬─────────────────────┘
                             │◄─────────────────────────────────────────┘
                             │
                    (   Return   )
```

# FIG. 14

# FIG. 15

```
                        ( Start )
                           │
   S401   ┌─────────────────────────────┐
          │ Read motion program and     │
          │ motion parameter            │
          └─────────────────────────────┘
                           │
   S402   ┌─────────────────────────────┐◄──────────────────────────┐
          │ Calculate motion instruction│                           │
          │ value                       │                           │
          └─────────────────────────────┘                           │
                           │                                        │
   S403   ┌─────────────────────────────┐                           │
          │ Execute simulation based on │                           │
          │ motion instruction values and│                          │
          │ simulation model            │                           │
          └─────────────────────────────┘                           │
                           │                                        │
   S404   ┌─────────────────────────────┐                           │
          │ Derive load moments and     │                           │
          │ downward forces             │                           │
          └─────────────────────────────┘                           │
                           │                                        │
   S405   ┌─────────────────────────────┐                           │
          │ Determine whether or not    │                           │
          │ suctioning will be successful and│                      │
          │ specify timing of dropping  │                           │
          └─────────────────────────────┘                           │
                           │                                        │
   S406      ◇ Are load moments ◇    NO                             │
              smaller than or equal to ───────────┐                 │
              threshold value Th?                 │                 │
                  │ YES                   S407 ┌────────────────────┐│
                  │                            │ Decrease maximum   ││
                  │                            │ acceleration rate during││
                  │                            │ horizontal movement ││
                  │                            └────────────────────┘│
                  │                                    │             │
                  │                       S408 ┌────────────────────┐│
                  │                            │ Store decreased maximum││
                  │                            │ acceleration rate as maximum││
                  │                            │ acceleration limit ││
                  │                            └────────────────────┘│
                  │                                    │             │
   S409      ◇ Is maximum ◇        NO                  │             │
              acceleration limit ──────────────┐       │             │
              stored?                          │       │             │
                  │ YES                 S410 ┌──────────────────────┐│
                  │                          │ Increase maximum acceleration││
                  │                          │ rate during horizontal ││
   S411   ┌──────────────────────┐           │ movement             ││
          │ Determine maximum     │          └──────────────────────┘│
          │ acceleration limit to be│                                │
          │ execution condition   │                                 │
          └──────────────────────┘                                  │
                  │                                                  │
   S412   ┌──────────────────────┐                                  │
          │ Display execution condition│                            │
          │ and simulation result │                                 │
          └──────────────────────┘                                  │
                  │
               ( End )
```

22

# FIG. 16

Europäisches
Patentamt

European
Patent Office

Office européen
des brevets

# EUROPEAN SEARCH REPORT

Application Number

EP 18 19 0432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2018/123087 A1 (OMRON TATEISI ELECTRONICS CO [JP]) 5 July 2018 (2018-07-05) | 1,3,5-7, 9-11 | INV. B25J9/16 |
| A,P | * paragraphs [0029], [0034], [0041] - [0048], [0053] - [0059] * ----- | 2,4,8 | |
| A | DE 10 2016 009030 A1 (FANUC CORP [JP]; PREFERRED NETWORKS INC [JP]) 2 February 2017 (2017-02-02) * paragraphs [0077] - [0083], [0091]; figure 4 * ----- | 1-11 | |

TECHNICAL FIELDS
SEARCHED (IPC)

B25J
G05B

The present search report has been drawn up for all claims

| Place of search | Date of completion of the search | Examiner |
|---|---|---|
| The Hague | 30 April 2019 | Groen, Fokke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 19 0432

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2019

| Patent document cited in search report | Publication date | Patent family member(s) | | Publication date |
|---|---|---|---|---|
| WO 2018123087 A1 | 05-07-2018 | JP | 2018103339 A | 05-07-2018 |
| | | WO | 2018123087 A1 | 05-07-2018 |
| DE 102016009030 A1 | 02-02-2017 | DE | 102016009030 A1 | 02-02-2017 |
| | | US | 2017028562 A1 | 02-02-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018026700 A

- JP H7256578 A